# EUROPEAN PATENT APPLICATION

(11) **EP 4 834 998 A1**
(43) Date of publication of application: **04.11.2026**
(21) Application number: 24913618.5
(22) Date of filing: 17.12.2024
(51) Int. Cl.: C08L 67/02, C08K 5/00, C08K 5/3465, C08K 5/3437, C08K 5/3445, C08L 67/06, C08G 63/42, C08J 5/18

(54) **POLYESTER RESIN COMPOSITION, PREPARATION METHOD THEREOF, AND POLYESTER FILM**

(30) Priority: 27.12.2023 KR 20230193544
(71) Applicant: Kolon Industries, Inc., Seoul 07793 (KR)
(72) Inventor: PARK, Ki Hyun, Seoul 07793 (KR); KIM, Ho Sub, Seoul 07793 (KR); NOH, Kyung Gyu, Seoul 07793 (KR); PARK, No Woo, Seoul 07793 (KR); SHIN, Mi, Seoul 07793 (KR); HONG, Choong Hee, Seoul 07793 (KR)
(74) Representative: Vossius & Partner Patentanwälte Rechtsanwälte mbB
(86) International application number: PCT/KR2024/020552
(87) International publication number: WO 2025/143675

(57) **Abstract**

Provided are a polyester resin composition including a polymer including a repeating unit represented by Chemical Formula 1 and a furan dicarboxylic acid-based compound represented by Chemical Formula 2, a preparation method thereof, a polyester chip, and a polyester film.

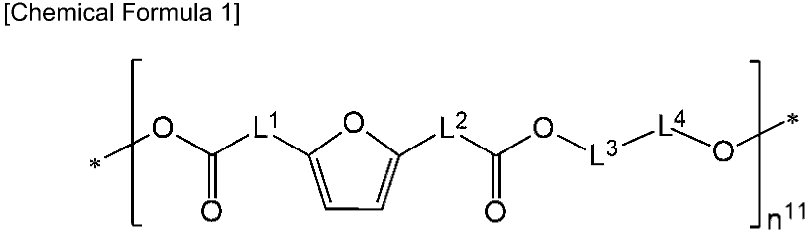

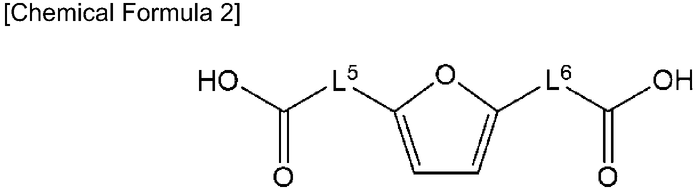

Definitions for Chemical Formula 1 and Chemical Formula 2 are as described in the specification.

## Description

### [Technical Field]

The present disclosure relates to a polyester resin composition, preparation method thereof, and a polyester film.

### [Background Art]

A polyester resin refers to a polymer resin having an ester (RO-C(=O)-R') functional group in a main chain, and is used for various applications such as for packaging, for display, and as an insulating material in various industrial fields.

A representative example thereof includes a polyethylene terephthalate (PET) resin produced by a reaction between terephthalic acid (TPA) and ethylene glycol (EG).

However, the main raw material for terephthalic acid is paraxylene, which is produced by refining crude oil. Accordingly, the production and use of terephthalic acid causes crude oil resource depletion. In addition, carbon dioxide emissions increase during the decomposition of terephthalic acid, causing environmental pollution and leading to climate change such as global warming.

In this regard, attempts are being made to replace terephthalic acid with 2,5-furandicarboxylic acid (FDCA) during the production of polyester resins. Herein, furan dicarboxylic acid is a biomass-derived material that prevents crude oil resource depletion and can minimize environmental pollution and climate change due to its biodegradability.

However, furan dicarboxylic acid is a compound with low thermal stability, which causes thermal discoloration such as yellowing or browning during the process of esterification reaction with a diol component. To solve this problem, a method of mixing furan dicarboxylic acid with an aliphatic dicarboxylic acid and reacting the mixture with a diol component has been devised, but the problem of thermal discoloration has still not been completely solved.

### Disclosure

### [Technical Problem]

According to an embodiment, provided is a polyester resin composition having biodegradability while minimizing thermal discoloration.

According to another embodiment, provided is a method for preparing a polyester resin composition that can minimize the time for an esterification reaction and prepare a polyester resin composition that can minimize thermal discoloration.

### [Technical Solution]

An embodiment provides a polyester resin composition including a polymer including a repeating unit represented by Chemical Formula 1 and a furan dicarboxylic acid-based compound represented by Chemical Formula 2:

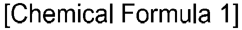

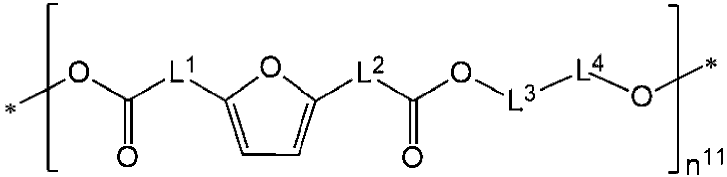

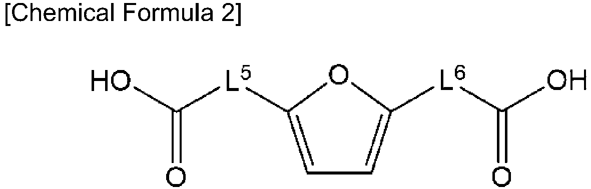

In Chemical Formula 1 and Chemical Formula 2,
L¹, L², L⁵, and L⁶ are each independently a single bond or a substituted or unsubstituted alkylene having 1 to 10 carbon atoms,
L³ and L⁴ are each independently a substituted or unsubstituted alkylene having 1 to 10 carbon atoms, and
n¹¹ is an integer from 50 to 200.

An amount of the unreacted furan dicarboxylic acid-based compound in the composition may be 0.1 ppm to 40 ppm.

The polymer including the repeating unit represented by Chemical Formula 1 may include a moiety derived from a furan dicarboxylic acid-based compound and a moiety derived from an alkylene glycol-based compound.

A molar ratio of the moiety derived from the furan dicarboxylic acid-based compound to the moiety derived from the alkylene glycol-based compound may be 1.2 to 1.5.

The composition may further include an oligomer, an aza bicyclo-based catalyst, an imidazole-based additive, or a combination thereof.

A number average molecular weight (Mn) of the oligomer may be 1,500 g/mol to 3,000 g/mol.

The aza bicyclo-based catalyst may be represented by any one or more of Chemical Formula 4 to Chemical Formula 6:

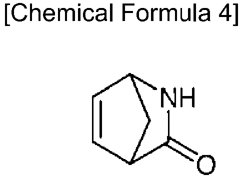

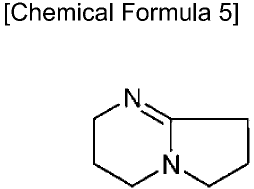

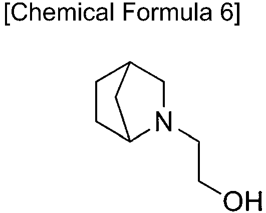

The imidazole-based additive may be represented by any one or more of Chemical Formula 7 to Chemical Formula 9:

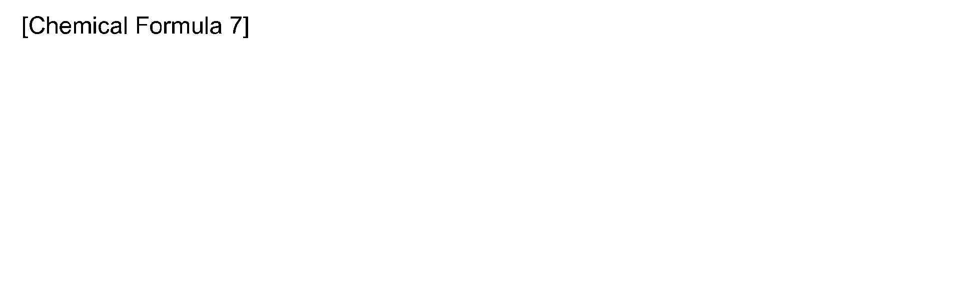

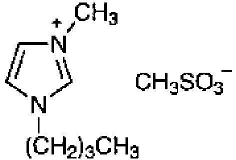

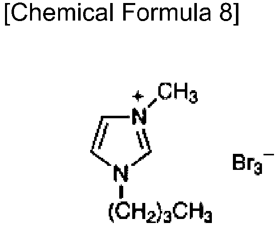

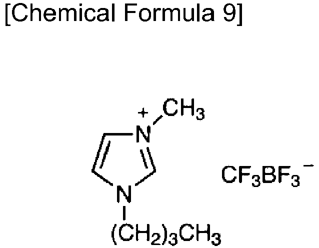

A number average molecular weight (Mn) of the polymer may be 20,000 g/mol to 40,000 g/mol.

Another embodiment provides a method for preparing a polyester resin composition which includes: an esterification reaction step of a reaction mixture including a furan dicarboxylic acid-based compound, an alkylene glycol-based compound, and an additive including an oligomer, an aza bicyclo-based catalyst, an imidazole-based additive, or a combination thereof; and a step of obtaining a polyester resin composition including a polymer and an unreacted furan dicarboxylic acid-based compound by polycondensing the intermediate product obtained through the esterification reaction, wherein an amount of the unreacted furan dicarboxylic acid-based compound in the polyester resin composition obtained by the polycondensation reaction is 0.1 ppm to 40 ppm.

The oligomer may be included in an amount of 10 wt% to 50 wt% based on a total weight of the reaction mixture.

A number average molecular weight (Mn) of the oligomer may be 1,500 g/mol to 3,000 g/mol.

Another embodiment provides a polyester film manufactured using the afroementioned polyester resin composition.

The polyester film may have a yellow index of 1.48 or less as measured based on the ASTM D1003-97 standard.

The polyester film may have a b* value of 1.41 or less according to the CIE1976 L*a*b* color system.

The polyester film may have a haze of 1.0 or less.

### [Advantageous Effects]

A polyester resin composition according to an embodiment can minimize thermal discoloration while exhibiting biodegradability.

In addition, a method for preparing a polyester resin composition according to another embodiment can minimize the time for an esterification reaction and prepare a polyester resin composition that can minimize thermal discoloration.

### [Best Mode]

The advantages and features of the technology described below, and methods for achieving them, will become clear with reference to the embodiments described in detail later along with the accompanying drawings. However, the implemented form is not limited to the embodiments disclosed below. Unless otherwise defined, all terms (including technical and scientific terms) used in the present specification may be used with meanings commonly understood by those of ordinary skill in the art. In addition, terms defined in commonly used dictionaries are not interpreted ideally or excessively unless clearly specifically defined.

In the present specification, unless explicitly described to the contrary, the word "comprise", and variations such as "comprises" or "comprising", will be understood to imply the inclusion of stated elements but not the exclusion of any other elements. In addition, the singular forms include the plural forms unless the context clearly indicates otherwise.

In the present specification, a 'moiety' means a certain part or unit derived from a specific compound when the specific compound participates in a chemical reaction and is included in a product of the chemical reaction. For example, a "moiety" derived from a furan dicarboxylic acid-based compound and a "moiety" derived from an alkylene glycol-based compound refer to a part derived from a furan dicarboxylic acid-based compound and a portion derived from an alkylene glycol-based compound, respectively.

In the present specification, the CIE1976 L*a*b* color system corresponds to a color space currently standardized worldwide as prescribed by the CIE (International Commission on Illumination). In this CIE 1976 L*a*b* color space, the L* value represents lightness in color coordinates and ranges from 0 to 100, where a value of 0 means perfect black and 100 means perfect white. a* indicates which of red and green the color leans toward; if this value is positive, i.e., "+", it is red, and if it is negative, i.e., "-", it is green. b* indicates which of yellow and blue the color leans toward; if this value is positive, "+", it is yellow, and if it is negative, "-", it is blue.

Based on the above definitions, embodiments of the present invention will be described in detail. However, these are presented as examples, and the present invention is not limited thereto, and the present invention is only defined by the scope of the claims to be described later.

### Polyester Resin Composition

An embodiment provides a polyester resin composition including a polymer including a repeating unit represented by Chemical Formula 1 and a furan dicarboxylic acid-based compound represented by Chemical Formula 2:

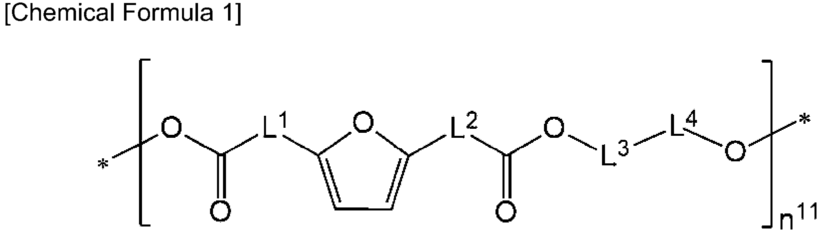

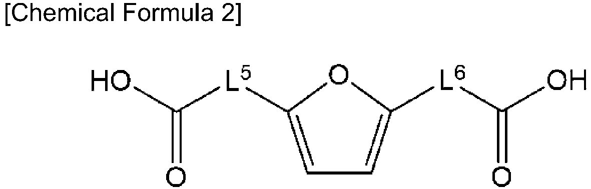

In Chemical Formula 1 and Chemical Formula 2, L¹, L², L⁵, and L⁶ are each independently a single bond or a substituted or unsubstituted alkylene having 1 to 10 carbon atoms, and are, for example, a single bond, a methylene group, an ethylene group, or a combination thereof, and may be a single bond or a methylene group.

L³ and L⁴ are each independently a substituted or unsubstituted alkylene having 1 to 10 carbon atoms, and are, for example, a single bond, a methylene group, an ethylene group, or a combination thereof, and may be a single bond or a methylene group.

n¹¹ is an integer from 50 to 200, and for example, the lower limit of n¹¹ may be 50, 60, 70, 80, 90, 100, 110, 120, 130, 140, or 150, and the upper limit thereof may be 200, 190, 180, 170, or 160.

The polymer including the repeating unit represented by Chemical Formula 1 may include a moiety derived from a furan dicarboxylic acid-based compound and a moiety derived from an alkylene glycol-based compound.

The furan dicarboxylic acid-based compound is derived from eco-friendly raw materials produced from biomass such as wood and corn, and may be completely decomposed (biodegraded) by microorganisms under certain conditions. Accordingly, if a furan dicarboxylic acid-based compound is used instead of terephthalic acid as a raw material for the polymer, crude oil resource depletion may be prevented. In addition, the polymer produced using a furan dicarboxylic acid-based compound as a raw material exhibits biodegradability and may contribute to preventing environmental pollution and climate change. However, furan dicarboxylic acid-based compounds have low thermal stability, so polymers produced using the same are yellowed or browned and exhibit low lightness. Accordingly, methods for minimizing thermal discoloration of a resin composition containing the same even when a high-temperature process is performed using a furan dicarboxylic acid-based compound having low thermal stability as a reactant have been studied. As a result, although the polyester resin composition according to an embodiment was prepared using a furan dicarboxylic acid-based compound as a raw material, it contains a trace amount of an unreacted furan dicarboxylic acid-based compound, and only when the amount of the unreacted furan dicarboxylic acid-based compound is minimized can yellowing or browning of the resin composition and a resin film formed therefrom be minimized and high lightness be implemented.

### Furan Dicarboxylic Acid-Based Compound

The polymer includes a moiety derived from a furan dicarboxylic acid-based compound (hereinafter, 'moiety derived from a furan dicarboxylic acid-based compound') and exhibits excellent biodegradability because it is derived from a furan dicarboxylic acid-based compound which may be represented by Chemical Formula 2.

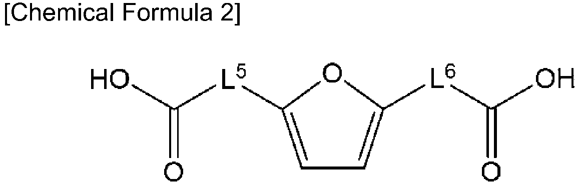

In Chemical Formula 2, L⁵ and L⁶ are each independently a single bond or a substituted or unsubstituted alkylene having 1 to 10 carbon atoms.

For example, the furan dicarboxylic acid-based compound may be 2,5-furandicarboxylic acid, and in this case, both L⁵ and L⁶ in Chemical Formula 2 may be single bonds.

The moiety derived from a furan dicarboxylic acid-based compound may be represented by Chemical Formula 2-1:

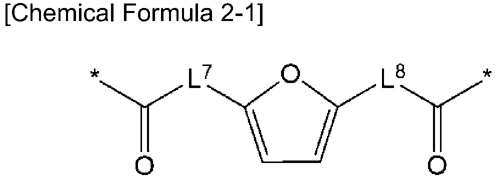

In Chemical Formula 2-1, L⁷ and L⁸ are each independently a single bond or a substituted or unsubstituted alkylene having 1 to 10 carbon atoms; and * indicates a bonding position.

For example, when the furan dicarboxylic acid-based compound is 2,5-furandicarboxylic acid, both L⁷ and L⁸ in Chemical Formula 2-1 may be single bonds.

### Alkylene Glycol-Based Compound

The polymer includes a moiety derived from an alkylene glycol-based compound (hereinafter, 'moiety derived from an alkylene glycol-based compound') and exhibits excellent compatibility and elongation properties due to the moiety derived from the alkylene glycol-based compound.

The alkylene glycol-based compound may be represented by Chemical Formula 3:

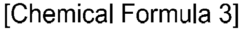

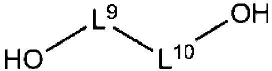

In Chemical Formula 3, L⁹ and L¹⁰ are each independently a substituted or unsubstituted alkylene having 1 to 10 carbon atoms. For example, the alkylene glycol-based compound may be ethylene glycol. In this case, L⁹ in Chemical Formula 3 may be a C1 alkylene (i.e., methylene) and L¹⁰ may be a C1 alkylene (i.e., methylene).

The moiety derived from an alkylene glycol-based compound may be represented by Chemical Formula 3-1:

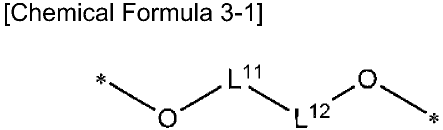

In Chemical Formula 3-1, L¹¹ and L¹² are each independently a substituted or unsubstituted alkylene having 1 to 10 carbon atoms; and * indicates a bonding position. For example, when the alkylene glycol-based compound is ethylene glycol, L¹¹ in Chemical Formula 3-1 may be a C1 alkylene (i.e., methylene) and L¹² may be a C1 alkylene (i.e., methylene).

A molar ratio of the moiety derived from the furan dicarboxylic acid-based compound to the moiety derived from the alkylene glycol-based compound in the polymer is 1.0 to 1.5, for example, 1.1 to 1.5, for example, 1.2 to 1.5, and is not limited thereto. When the molar ratio of the moiety derived from the furan dicarboxylic acid-based compound and the moiety derived from the alkylene glycol-based compound in the polymer satisfies the above range, the amount of the unreacted furan dicarboxylic acid-based compound in the composition according to an embodiment may be minimized, and thus thermal discoloration of the composition may be minimized.

A number average molecular weight (Mn) of the polymer may be 20,000 g/mol to 40,000 g/mol, for example, 22,000 g/mol to 38,000 g/mol, 23,000 g/mol to 37,000 g/mol, 24,000 g/mol to 36,000 g/mol, or 24,000 g/mol to 35,000 g/mol, and is not limited thereto. When the number average molecular weight (Mn) of the polymer satisfies the above range, film-forming processing is possible so that the processed film may be used as a packaging material, and a desired modulus may be achieved. In addition, productivity and yield may be improved by optimizing the viscosity of the composition.

A ratio of a weight average molecular weight (Mw) to a number average molecular weight (Mn) of the polymer, that is, a molecular weight distribution (MWD), may be 1.1 to 3.0, for example, 1.4 to 2.7, 1.6 to 2.5, or 1.79 to 2.4, and is not limited thereto.

### Unreacted Furan Dicarboxylic Acid-Based Compound

A polyester resin composition according to an embodiment may minimize thermal discoloration of the composition by including an unreacted furan dicarboxylic acid-based compound represented by Chemical Formula 2. The unreacted furan dicarboxylic acid-based compound refers to a furan dicarboxylic acid-based compound that did not form a polymer after the polymerization reaction between the furan dicarboxylic acid-based compound and an alkylene glycol-based compound, that is, did not react:

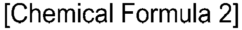

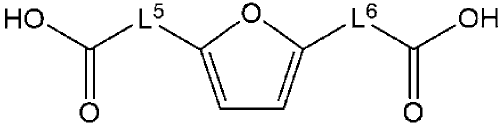

In Chemical Formula 2, L⁵ and L⁶ are each independently a single bond or a substituted or unsubstituted alkylene having 1 to 10 carbon atoms.

Since the unreacted furan dicarboxylic acid-based compound has low thermal stability, even if a composition containing the same is post-treated under high temperature or vacuum state, the unreacted furan dicarboxylic acid-based compound may not be removed and may remain in the composition or a polyester chip or film formed from the composition, which may bring about yellowing and discoloration.

An amount of the unreacted furan dicarboxylic acid-based compound in the composition is 40 ppm or less, for example, 0.1 ppm to 40 ppm, 0.1 ppm to 35 ppm, 0.1 ppm to 31 ppm, 0.1 ppm to 30 ppm, 0.1 ppm to 25 ppm, 0.1 ppm to 20 ppm, and is not limited thereto. When the unreacted furan dicarboxylic acid-based compound is included more than the above range, carbonization occurs when an excess of the unreacted furan dicarboxylic acid-based compound is exposed to high temperatures, and the b* value of the resin composition and the polyester film formed therefrom may increase and thermal discoloration to yellow may occur. That is, when the unreacted furan dicarboxylic acid-based compound is included in the composition within the above range, thermal discoloration of the composition may be minimized. Furthermore, the composition satisfies the food packaging raw material standard according to the regulations of the U.S. Food and Drug Administration (FDA), so the composition may be applied when producing food packaging films and the like.

A polyester resin composition according to an embodiment may further include an oligomer, an aza bicyclo-based catalyst, an imidazole-based additive, or a combination thereof.

The oligomer is an oligomer derived from a reaction between a furan dicarboxylic acid-based compound and an alkylene glycol-based compound, and refers to a compound having a similar type of structural unit as the polymer including the moiety derived from the furan dicarboxylic acid-based compound and the moiety derived from the alkylene glycol-based compound but having a smaller molecular weight. Since the composition further includes an oligomer, the amount of the unreacted furan dicarboxylic acid-based compound in the composition may be in the above range, and thermal discoloration of the composition may be minimized.

A number average molecular weight (Mn) of the oligomer is 1,500 g/mol to 3,000 g/mol, for example, 1,600 g/mol to 2,900 g/mol, 1,700 g/mol to 2,800 g/mol, and is not limited thereto.

The composition may further include a catalyst or an additive, which will be described in detail in the following method for preparing a polyester resin composition.

### Method for Preparing Polyester Resin Composition

Another embodiment provides a method for preparing a polyester resin composition which includes: an esterification reaction step of a reaction mixture including a furan dicarboxylic acid-based compound, an alkylene glycol-based compound, and an additive including an oligomer, an aza bicyclo-based catalyst, an imidazole-based additive, or a combination thereof; and a step of obtaining a polyester resin composition including a polymer and an unreacted furan dicarboxylic acid-based compound by polycondensing the intermediate product obtained through the esterification reaction.

Hereinafter, descriptions overlapping with the above contents will be omitted, and each step of the manufacturing method will be described in detail.

A method for preparing a polyester resin composition according to an embodiment includes a reaction for esterifying a reaction mixture including a furan dicarboxylic acid-based compound, an alkylene glycol-based compound, and an additive including an oligomer, an aza bicyclo-based catalyst, an imidazole-based additive, or a combination thereof. As described above, since the reaction mixture includes an additive including an oligomer, an aza bicyclo-based catalyst, an imidazole-based additive, or a combination thereof, the amount of the unreacted furan dicarboxylic acid-based compound in the composition may be minimized, and thermal discoloration of the composition may be minimized. Furthermore, process efficiency may be improved by minimizing the esterification reaction time.

In the esterification reaction, a molar ratio of the furan dicarboxylic acid-based compound to the alkylene glycol-based compound is 1.0 to 1.5, for example, 1.1 to 1.5, for example, 1.2 to 1.5, and is not limited thereto. When the molar ratio of the furan dicarboxylic acid-based compound to the alkylene glycol-based compound in the polymer satisfies the above range, the amount of the unreacted furan dicarboxylic acid-based compound in the composition according to an embodiment may be minimized, and thus thermal discoloration of the composition may be minimized.

In the esterification reaction, the reaction mixture includes 10 wt% to 50 wt% of an oligomer based on the total weight, for example, 15 wt% to 50 wt%, 20 wt% to 50 wt%, 25 wt% to 50 wt%, 30 wt% to 50 wt%, and is not limited thereto. Since the oligomer is included in the reaction mixture in the above amount range, the amount of the unreacted furan dicarboxylic acid-based compound in the polyester resin composition may be minimized, thereby minimizing thermal discoloration of the composition.

During the esterification reaction, the reaction mixture may include an aza bicyclo-based catalyst, an imidazole-based additive, or a combination thereof. For example, an aza bicyclo-based catalyst refers to a compound including a nitrogen-containing ring in the compound and another ring sharing two or more carbons or a nitrogen atom and one or more carbons among the nitrogen-containing ring. For example, the aza bicyclo-based catalyst may be represented by any one or more of Chemical Formula 4 to Chemical Formula 6 below, and is not limited thereto:

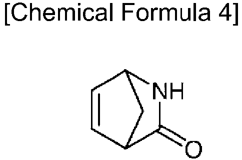

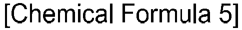

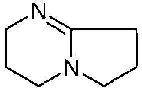

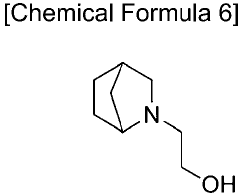

Meanwhile, as a catalyst used during the esterification reaction, in addition to the aza bicyclo-based catalyst, a catalyst such as a titanium (Ti)-based compound, a tin (Sn)-based compound, or an antimony (Sb)-based compound may be further included. By including the catalyst, the reaction rate from the initial stage of the esterification reaction may be improved, and the time during which the polyester resin composition is exposed to heat may be shortened. The esterification reaction catalyst may be used in an amount of 1 ppm to 100 ppm based on a central atom in the synthesized polyester. When the amount of the esterification reaction catalyst is included in the above range, it is possible to improve appearance physical properties of the prepared polyester and at the same time greatly improve the efficiency of the esterification reaction.

For example, an imidazole-based additive is a compound including an imidazolium cation, and a substituted or unsubstituted C1 to C10 alkyl group may be substituted on both nitrogens of the imidazolium. In addition, it includes an anion for matching the charge with the imidazolium cation, and any type of anion may be included as long as it is a monovalent anion. For example, the imidazole-based additive may be represented by any one or more of Chemical Formula 7 to Chemical Formula 9:

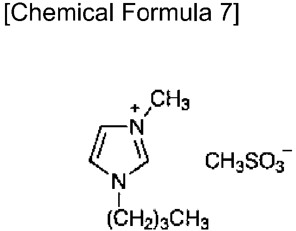

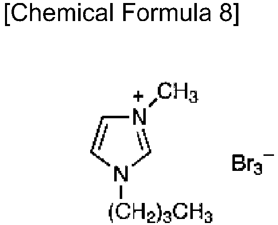

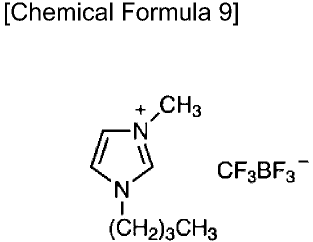

The esterification reaction may be performed for 1 to 5 hours under a nitrogen (N₂) atmosphere, a temperature range of 180 °C to 250 °C, and a pressure of 1 to 5.5 atm. For example, the esterification reaction may be performed at a temperature of 180 °C or higher, 182 °C or higher, 184 °C or higher, or 185 °C or higher, and 220 °C or lower, 210 °C or lower, 200 °C or lower, or 195 °C or lower. In addition, the esterification reaction may be performed at 1 atm or higher, and 5.5 atm or lower, 5 atm or lower, 3 atm or lower, or 1.5 atm or lower, and may be performed for 1 hour or longer, 1.5 hours or longer, or 2 hours or longer, and 5 hours or shorter, 4 hours or shorter, or 3 hours or shorter. When the temperature, pressure, reaction time, etc. of the esterification reaction are included in the above ranges, there are advantages that the reaction yield is high, the reaction proceeds sufficiently, the physical properties of the finally produced polyester are improved, and simultaneously the possibility that the appearance of the produced polyester becomes yellowing is lowered.

The transesterification reaction may be performed in a batch type or a continuous type, and each raw material may be added separately, but as an example, it may be added in the form of a slurry in which a furan-based dicarboxylic acid is mixed with the alkylene glycol.

A method for preparing a polyester resin composition according to an embodiment includes a process of polycondensing an intermediate product obtained through an esterification reaction after the esterification reaction.

The polycondensation reaction may be performed for 2 to 6 hours under a temperature range of 240 to 300 °C; and a pressure of 1 torr or less or 0.4 to 0.8 torr or less. When the temperature, pressure, reaction time, etc. during the polycondensation are included in each of the above ranges, there are advantages that glycol, which is a byproduct of the polycondensation reaction, is effectively removed, so that the final reaction product exhibits an appropriate intrinsic viscosity and the possibility that the appearance of the produced polyester becomes yellowing is lowered.

During the polycondensation, a polycondensation catalyst may be used. The polycondensation catalyst may be added to the product of the esterification reaction before the start of the polycondensation reaction, before the esterification reaction, or during the esterification reaction step. As the polycondensation catalyst, a titanium-based compound, a germanium-based compound, an antimony-based compound, an aluminum-based compound, a tin-based compound, or a mixture thereof may be used. Examples of the titanium-based compound include tetraethyl titanate, acetyl tripropyl titanate, tetrapropyl titanate, tetrabutyl titanate, polybutyl titanate, 2-ethylhexyl titanate, octylene glycol titanate, lactate titanate, triethanolamine titanate, acetylacetonate titanate, ethyl acetoacetic ester titanate, isostearyl titanate, titanium dioxide, a titanium dioxide/silicon dioxide copolymer, a titanium dioxide/zirconium dioxide copolymer, and the like. . Examples of the germanium-based compound include germanium dioxide (GeO2), germanium tetrachloride (GeCl₄), germanium ethyleneglycoxide, germanium acetate, copolymers using these, mixtures thereof, and the like.

Another embodiment provides a polyester chip and a polyester film including the polyester resin composition.

The polyester film has a yellow index of 1.48 or less, for example, 1.47 or less, 1.46 or less, 1.20 or less, 1.10 or less, 1.0 or less, and for example, 1.2 or more, 1.25 or more, 1.30 or more, as measured based on the ASTM D1003-97 standard, and is not limited thereto.

The polyester film has a b* value of 1.41 or less, for example, 1.40 or less, 1.39 or less, 1.38 or less, and for example, 1.20 or more, 1.25 or more, 1.30 or more, according to the CIE1976 L*a*b* color system, and is not limited thereto.

The haze of the polyester film is 1.0 or less, for example, 0.9 or less, 0.8 or less, and for example, 0.1 or more, 0.2 or more, and is not limited thereto.

### [Mode for Invention]

Hereinafter, examples and comparative examples of the present invention are described. The following examples are only one illustration of the present invention, and the present invention is not limited to the following examples.

### Preparation of Polyester Resin Composition

### Example 1

Into a 2 L autoclave reactor, 771.2 g of 2,5-furandicarboxylic acid (hereinafter, FDCA), 368.0 g of ethylene glycol (hereinafter, EG), and 106.8g (10 wt%) of a polyethylene furanoate oligomer were added, and an esterification reaction of FDCA and EG was carried out for 2 hours at a temperature of 210 °C and under a nitrogen atmosphere.

After completion of the esterification reaction, a titanium-based catalyst (AC436) was added such that the concentration was 10 ppm, followed by stirring for 30 minutes, and the temperature inside the reactor was raised for 1 hour to perform a reaction for 2 hours to 6 hours under a vacuum state of 0.8 torr or less at a temperature of 260 °C, and when the load transmitted to the torque meter of the autoclave reached a desired load, the product was discharged to obtain a polyester resin composition. The concentration of unreacted 2,5-furandicarboxylic acid in the obtained polyester resin composition is 19 ppm.

### Example 2

A polyester resin composition was prepared in the same manner as in Example 1, except that 599.8 g of 2,5-furandicarboxylic acid, 286.2 g of ethylene glycol, and 320.44 g (30 wt%) of a polyethylene furanoate oligomer were used. The concentration of unreacted 2,5-furandicarboxylic acid in the obtained polyester resin composition is 15 ppm.

### Example 3

A polyester resin composition was prepared in the same manner as in Example 1, except that 428.4 g of 2,5-furandicarboxylic acid, 204.4 g of ethylene glycol, and 534.07 g (50 wt%) of a polyethylene furanoate oligomer were used. The concentration of unreacted 2,5-furandicarboxylic acid in the obtained polyester resin composition is 12 ppm.

### Example 4

Into a 2 L autoclave reactor, 856.9 g of 2,5-furandicarboxylic acid (hereinafter, FDCA) and 408.9 g of ethylene glycol (hereinafter, EG) were added, and using 50 ppm of 2-azabicyclo[2.2.1]hept-5-en-3-one (hereinafter, ABH) as a catalyst for an esterification reaction, an esterification reaction of FDCA and EG was carried out for 2 hours at a temperature of 210 °C and under a nitrogen atmosphere.

After completion of the esterification reaction, a titanium-based catalyst (AC436) was added such that the concentration was 10 ppm, followed by stirring for 30 minutes, and the temperature inside the reactor was raised for 1 hour to perform a reaction for 2 hours to 6 hours under a vacuum state of 0.8 torr or less at a temperature of 260 °C, and when the load transmitted to the torque meter of the autoclave reached a desired load, the product was discharged to obtain a polyester resin composition. The concentration of unreacted 2,5-furandicarboxylic acid in the obtained polyester resin composition is 19 ppm.

### Example 5

A polyester resin composition was prepared in the same manner as in Example 4, except that 50 ppm of 1,5-diazabicyclo[4.3.0]-5-nonene (hereinafter, DAC) was used instead of 50 ppm of ABH as a catalyst for the esterification reaction. The concentration of unreacted 2,5-furandicarboxylic acid in the obtained polyester resin composition is 18 ppm.

### Example 6

A polyester resin composition was prepared in the same manner as in Example 4, except that 50 ppm of 2-(2-azabicyclo[2.2.1]hept-2-yl)ethanol (hereinafter, ABHE) was used instead of 50 ppm of ABH as a catalyst for the esterification reaction. The concentration of unreacted 2,5-furandicarboxylic acid in the obtained polyester resin composition is 17 ppm.

### Example 7

Into a 2 L autoclave reactor, 856.9 g of 2,5-furandicarboxylic acid (hereinafter, FDCA) and 408.9 g of ethylene glycol (hereinafter, EG) were added, and using 50 ppm of 1-Butyl-3-methylimidazolium methanesulfonate (hereinafter, BMIMS) as an additive, an esterification reaction of FDCA and EG was carried out for 2 hours at a temperature of 210 °C and under a nitrogen atmosphere.

After completion of the esterification reaction, a titanium-based catalyst (AC436) was added such that the concentration was 10 ppm, followed by stirring for 30 minutes, and the temperature inside the reactor was raised for 1 hour to perform a reaction for 2 hours to 6 hours under a vacuum state of 0.8 torr or less at a temperature of 260 °C, and when the load transmitted to the torque meter of the autoclave reached a desired load, the product was discharged to obtain a polyester resin composition. The concentration of unreacted 2,5-furandicarboxylic acid in the obtained polyester resin composition is 15 ppm.

### Example 8

A polyester resin composition was prepared in the same manner as in Example 7, except that 50 ppm of 1-butyl-3-methylimidazolium tribromide (hereinafter, BMITB) was used instead of 50 ppm of BMIMS as an additive. The concentration of unreacted 2,5-furandicarboxylic acid in the obtained polyester resin composition is 14 ppm.

### Example 9

A polyester resin composition was prepared in the same manner as in Example 7, except that 50 ppm of 1-butyl-3-methylimidazolium trifluoro(trifluoromethyl)borate (hereinafter, BMITTB) was used instead of 50 ppm of BMIMS as an additive. The concentration of unreacted 2,5-furandicarboxylic acid in the obtained polyester resin composition is 13 ppm.

### Comparative Example 1

A polyester resin composition was prepared in the same manner as in Example 1, except that 856.9 g of 2,5-furandicarboxylic acid (hereinafter, FDCA) and 408.9 g of ethylene glycol were used, and no oligomer was used. The concentration of unreacted 2,5-furandicarboxylic acid in the obtained polyester resin composition is 51 ppm.

### Comparative Example 2

A polyester resin composition was prepared in the same manner as in Comparative Example 1, except that the concentration of the catalyst for the polycondensation reaction was 50 ppm. The concentration of unreacted 2,5-furandicarboxylic acid in the obtained polyester resin composition is 53 ppm.

### Comparative Example 3

A polyester resin composition was prepared in the same manner as in Comparative Example 1, except that 5 ppm of PA was further used as an additive in the reaction mixture. The concentration of unreacted 2,5-furandicarboxylic acid in the obtained polyester resin composition is 54 ppm.

### Comparative Example 4

A polyester resin composition was prepared in the same manner as in Comparative Example 1, except that 443.0 of ethylene glycol was used. The concentration of unreacted 2,5-furandicarboxylic acid in the obtained polyester resin composition is 35 ppm.

### Comparative Example 5

A polyester resin composition was prepared in the same manner as in Comparative Example 4, except that 511.1g of ethylene glycol was used. The concentration of unreacted 2,5-furandicarboxylic acid in the obtained polyester resin composition is 31 ppm.

Materials used and amounts thereof during the preparation of the polyester resin compositions according to Examples 1 to 9 and Comparative Examples 1 to 5 are summarized in Table 1.

**(Table 1)**

| | FDCA (g) | EG (g) | EG/FDCA molar ratio | Oligomer (g) (number average molecular weight (Mn, g/mol) | ES catalyst (concentration) | PC catalyst (concentration) | Additive (concentration) |
|---|---|---|---|---|---|---|---|
| Example 1 | 771.2 | 368.0 | 1.2 | 106.8 (Mn 2,550) | - | AC436 10 ppm | - |
| Example 2 | 599.8 | 286.2 | 1.2 | 320.44 (Mn 2,250) | - | AC436 10 ppm | - |
| Example 3 | 428.4 | 204.4 | 1.2 | 534.07 (Mn 2,740) | - | AC436 10 ppm | - |
| Example 4 | 856.9 | 408.9 | 1.2 | - | ABH 50 ppm | AC436 10 ppm | - |
| Example 5 | 856.9 | 408.9 | 1.2 | - | DAC 50 ppm | AC436 10 ppm | - |
| Example 6 | 856.9 | 408.9 | 1.2 | - | ABHE 50 ppm | AC436 10 ppm | - |
| Example 7 | 856.9 | 408.9 | 1.2 | - | - | AC436 10 ppm | BMIMS 50 ppm |
| Example 8 | 856.9 | 408.9 | 1.2 | - | - | AC436 10 ppm | BMITB 50 ppm |
| Example 9 | 856.9 | 408.9 | 1.2 | - | - | AC436 10 ppm | BMITTB 50 ppm |
| Comparative Example 1 | 856.9 | 408.9 | 1.2 | - | - | AC436 10 ppm | - |
| Comparative Example 2 | 856.9 | 408.9 | 1.2 | - | - | AC436 50 ppm | - |
| Comparative Example 3 | 856.9 | 408.9 | 1.2 | - | - | AC436 10 ppm | PA 5 ppm |
| Comparative Example 4 | 856.9 | 443.0 | 1.3 | - | - | AC436 10 ppm | - |
| Comparative Example 5 | 856.9 | 511.1 | 1.5 | - | - | AC436 10 ppm | - |

### Evaluation 1: Evaluation of Physical Properties of Polyester Chip

For each polyester resin composition prepared in Examples 1 to 9 and Comparative Examples 1 to 5, the polyester polymer produced through the above process was discharged through a reactor bottom nozzle, cooled by passing through a cooling water bath, and pellets were cut in a rotary cutter. Moisture was removed from the cut pellets using a blower to prepare polyester polymer chips. Polyester chips were prepared by the above method, and physical properties were evaluated for each of the prepared polyester chips by the following methods and are shown in Table 2.

### Evaluation 1-1: Measurement of Unreacted FDCA Amount

A methanol solvent and FDCA (Sigma-Aldrich Co.) were added to a 10 ml vial to prepare concentrations of 0 ppm, 100 ppm, 200 ppm, and 500 ppm. A calibration curve for each amount was drawn for this solution according to the following measuring instrument and measurement conditions. The reliability of this calibration curve for each amount should be 99.95% or higher. The polyester chips prepared in Examples 1 to 9 and Comparative Examples 1 to 5 were put into a grinder and ground into a powder form. 0.2 g of the powder and 2 g of MeOH were added to a 10 ml vial and diluted by 10 wt%, and then unreacted FDCA was dissolved out for 24 hours with a magnetic stirrer. After filtering this solution, the retention time and peak area of unreacted FDCA were calculated according to the measuring instrument and measurement conditions below. Using this area and the calibration curve for each amount above, the unreacted FDCA amount in the polyester resin composition was measured.

### Analytical Instrument and Conditions

- Analysis method: High Performance Liquid Chromatography (HLPC)
- Analytical instrument: Agilent 1260 Infinity II
- Detector: Agilent 1100 series G1318A
- Mobile phase/Eluent: Acetonitrile/Ammonium acetate 20 mM aqueous solution = 20/80
- Column (maker, model no.) : C18(Hector) (250 mm × 4.6 mm, 5 µm particle size)
- Temperature : 25 °C
- Flow rate : 0.7 mL/min
- Injection volume, Sample concentration: 1 µl, 0.1% MeOH, DMSO solution
- Quantitative wavelength: 265 nm

### Evaluation 1-2: Color Evaluation

To prevent deviations in color difference values, more than half (80g or more) of the capacity of a container exclusively for chip measurement was filled with the polyester chips prepared according to Examples 1 to 9 and Comparative Examples 1 to 5, and the rest was left as air, and L* and b* values were measured using a chip colorimeter from Nippon Denshoku (sa-4000).

### Evaluation 1-3: Intrinsic Viscosity Evaluation

0.5 g of the polyester chips prepared according to Examples 1 to 9 and Comparative Examples 1 to 5 were added to a vial in 20ml along with 10 ml of a phenol : tetrachloroethane 1:1 solution, placed in a 100 °C oil bath to completely dissolve, and then intrinsic viscosity (IV) was measured at 25 °C with an Ostwald viscometer.

### Evaluation 1-4: Molecular Weight Evaluation

The number average molecular weight (Mn) of the oligomer and the polyester resin compositions prepared according to Examples and Comparative Examples was measured by gel chromatography under the following conditions.
- Measurement Instrument : EcoSEC HLC-8320 GPC
- Column (maker, model no.): TSKgel guardcolumn SuperAW-H + 2 x TSKgel SuperAWM-H
- Eluent : Hexafluoroisopropanol (HFIP) + 0.01 N Sodium trifluoroacetate (NaTFA)
- Temperature : 40 °C
- Flow rate : 0.3 mL/min
- Injection volume, sample concentration : 15 µl, 3 mg/mL
- Standard sample : Polymethyl methacrylate (PMMA)
- Detector: Refractive Index (RI) detector

### Evaluation 2: Evaluation of Physical Properties of Polyester Resin Film

Each of the polyester resin compositions prepared in Examples 1 to 9 and Comparative Examples 1 to 5 was melted at a temperature of 180 °C to 260 °C. The melt was extruded through a die to be formed into a sheet shape and rapidly cooled. The sheet thus obtained was stretched 3.0 times in a machine direction (MD) and then stretched 3.7 times in a transverse direction (TD). To impart dimensional stability to the stretched film, heat setting was performed at 120 °C to 160 °C under tension to obtain a biaxially oriented film. Physical properties were evaluated for each of the polyester resin films prepared above by the following methods and are shown in Table 2.

### Evaluation 2-1: Evaluation of Y Transmittance, Yellow Index, and b*

Polyester films prepared from the polyester resin compositions according to Examples 1 to 9 and Comparative Examples 1 to 5 were cut into a size of 10 cm X 10 cm (length in machine direction X length in transverse direction) to prepare specimens. For the specimens, parallel transmittance, diffuse transmittance, yellow index, and b* value of the specimens were measured by the ASTM D1003-97 measurement method using a CM-3600A spectrophotometer from Minolta Co. Y transmittance is defined as the sum of parallel transmittance and diffuse transmittance. Accordingly, the transmittance was obtained from the Y parallel transmittance and diffuse transmittance of the specimen.

### Evaluation 2-2: Evaluation of Haze

For the polyester biaxially oriented films according to Examples 1 to 9 and Comparative Examples 1 to 5, the haze of the film was measured with a Haze Meter, which is a Murakami Color Research Lab. (HM-150) facility.

**(Table 2)**

| | Polyester resin chip | | | | | Polyester resin film | | | |
|---|---|---|---|---|---|---|---|---|---|
| | Unreacted FDCA amount (ppm) | L | b | Intrinsic viscosity (IV) (25 °C) | Number average molecular weight (Mn, g/mol) | Y transmittance (D65) | Yellow index | b* | Haze |
| Example 1 | 19 | 61.5 | 12.12 | 0.651 | 24,850 | 89.21 | 1.48 | 1.41 | 0.9 |
| Example 2 | 15 | 60.23 | 13.4 | 0.657 | 25,130 | 89.36 | 1.46 | 1.39 | 0.9 |
| Example 3 | 12 | 60.12 | 13.98 | 0.647 | 24,640 | 89.39 | 1.46 | 1.39 | 0.6 |
| Example 4 | 19 | 60.1 | 12.4 | 0.651 | 24,820 | 89.51 | 1.45 | 1.37 | 0.5 |
| Example 5 | 18 | 60.5 | 12.5 | 0.65 | 24,790 | 89.56 | 1.44 | 1.37 | 0.4 |
| Example 6 | 17 | 60.7 | 13.1 | 0.641 | 24,370 | 89.68 | 1.43 | 1.35 | 0.5 |
| Example 7 | 15 | 61.1 | 12.9 | 0.642 | 24,410 | 89.94 | 1.40 | 1.32 | 0.3 |
| Example 8 | 14 | 62.01 | 12.8 | 0.659 | 25,230 | 89.85 | 1.41 | 1.33 | 0.3 |
| Example 9 | 13 | 61.7 | 12.7 | 0.637 | 24,170 | 89.39 | 1.46 | 1.39 | 0.6 |
| Comparative Example 1 | 51 | 59.12 | 14.12 | 0.65 | 24,800 | 89.11 | 1.49 | 1.42 | 1.1 |
| Comparative Example 2 | 53 | 57.48 | 15.49 | 0.648 | 24,700 | 88.64 | 1.54 | 1.47 | 1.2 |
| Comparative Example 3 | 54 | 58.49 | 14.24 | 0.647 | 24,650 | 88.93 | 1.51 | 1.44 | 1.1 |
| Comparative Example 4 | 35 | 54.59 | 16.12 | 0.651 | 24,860 | 87.81 | 1.63 | 1.57 | 1.1 |
| Comparative Example 5 | 31 | 52.19 | 17.59 | 0.653 | 24,940 | 87.12 | 1.70 | 1.65 | 1.2 |

Referring to Table 2, while the polyester resin compositions according to Comparative Examples had an unreacted FDCA amount exceeding 50 ppm, the polyester resin compositions according to Examples had an unreacted FDCA amount of 30 ppm or less. It can be seen that the polyester resin films manufactured from the polyester resin compositions according to Examples have a lower yellow index and a lower b* value than the polyester resin films according to Comparative Examples. That is, the polyester resin films according to Examples did not exhibit thermal discoloration compared to Comparative Examples. In addition, it can be seen that the polyester resin films manufactured from the polyester resin compositions according to Examples have a higher Y transmittance and a lower haze value than the polyester resin films according to Comparative Examples. That is, it was confirmed that the polyester resin films according to Examples can implement higher transparency compared to Comparative Examples.

Although preferred embodiments have been described in detail above, the scope of the present invention is not limited thereto, and various modifications and improvements by those skilled in the art using the basic concept defined in the following claims also fall within the scope of the present invention.

## Claims

1. A polyester resin composition, comprising
a polymer comprising a repeating unit represented by Chemical Formula 1, and
a furan dicarboxylic acid-based compound represented by Chemical Formula 2: 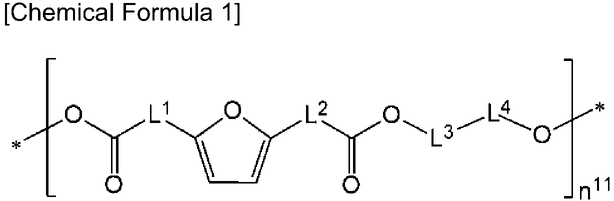 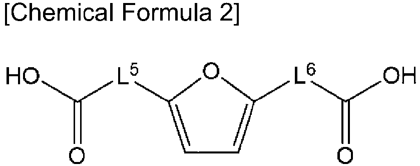
wherein, in Chemical Formula 1 and Chemical Formula 2,
L¹, L², L⁵, and L⁶ are each independently a single bond or a substituted or unsubstituted alkylene having 1 to 10 carbon atoms,
L³ and L⁴ are each independently a substituted or unsubstituted alkylene having 1 to 10 carbon atoms, and
n¹¹ is an integer from 50 to 200.

2. The polyester resin composition of claim 1, wherein an amount of the furan dicarboxylic acid-based compound in the composition is 0.1 ppm to 40 ppm.

3. The polyester resin composition of claim 1, wherein the polymer comprising the repeating unit represented by Chemical Formula 1 comprises a moiety derived from a furan dicarboxylic acid-based compound and a moiety derived from an alkylene glycol-based compound.

4. The polyester resin composition of claim 1, wherein a molar ratio of the moiety derived from the furan dicarboxylic acid-based compound to the moiety derived from the alkylene glycol-based compound is 1.2 to 1.5.

5. The polyester resin composition of claim 1, further comprising an oligomer, an aza bicyclo-based catalyst, an imidazole-based additive, or a combination thereof in the composition.

6. The polyester resin composition of claim 5, wherein a number average molecular weight (Mn) of the oligomer is 1,500 g/mol to 3,000 g/mol.

7. The polyester resin composition of claim 5, wherein the aza bicyclo-based catalyst is represented by any one or more of Chemical Formula 4 to Chemical Formula 6:

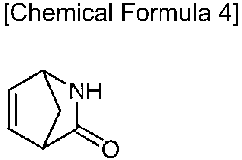

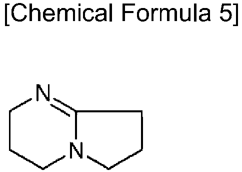

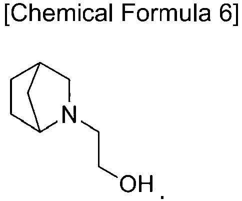

8. The polyester resin composition of claim 5, wherein the imidazole-based additive is represented by any one or more of Chemical Formula 7 to Chemical Formula 9:

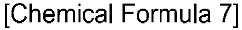

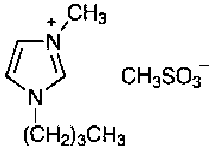

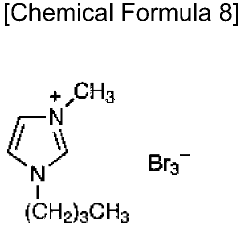

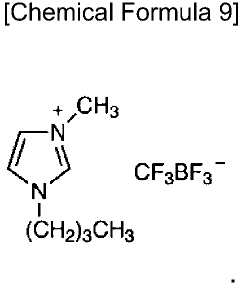

9. The polyester resin composition of claim 1, wherein a number average molecular weight (Mn) of the polymer is 20,000 g/mol to 40,000 g/mol.

10. A method for preparing a polyester resin composition, comprising
performing an esterification reaction of a reaction mixture comprising a furan dicarboxylic acid-based compound, an alkylene glycol-based compound, and an additive comprising an oligomer, an aza bicyclo-based catalyst, an imidazole-based additive, or a combination thereof; and
obtaining a polyester resin composition comprising a polymer and an unreacted furan dicarboxylic acid-based compound by polycondensing the intermediate product obtained through the esterification reaction,
wherein an amount of the unreacted furan dicarboxylic acid-based compound in the polyester resin composition obtained by the polycondensation reaction is 0.1 ppm to 40 ppm.

11. The method for preparing the polyester resin composition of claim 10, wherein a molar ratio of the furan dicarboxylic acid-based compound to the alkylene glycol-based compound is 1.2 to 1.5, the oligomer is included in an amount of 10 wt% to 50 wt% based on the total weight of the reaction mixture, and a number average molecular weight (Mn) of the oligomer is 1,500 g/mol to 3,000 g/mol.

12. The method for preparing the polyester resin composition of claim 10, wherein the aza bicyclo-based catalyst is represented by any one or more of Chemical Formula 4 to Chemical Formula 6, and the imidazole-based additive is represented by any one or more of Chemical Formula 7 to Chemical Formula 9:

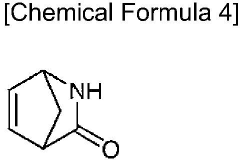

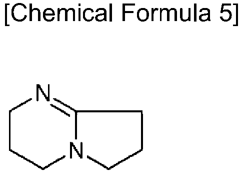

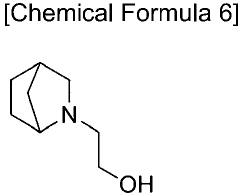

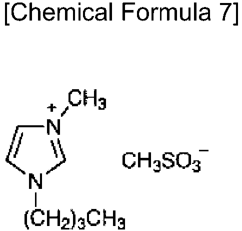

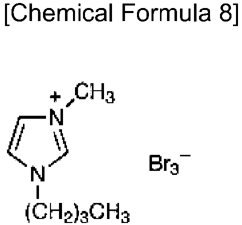

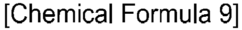

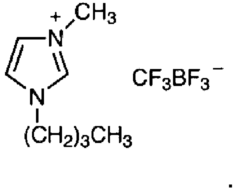

13. A polyester film manufactured using the polyester resin composition of any one of claims 1 to 9.

14. The polyester film of claim 13, wherein the polyester film has a yellow index of 1.48 or less as measured based on the ASTM D1003-97 standard.

15. The polyester film of claim 13, wherein the polyester film has a b* value of 1.41 or less and a haze of 1.0 or less according to the CIE1976 L*a*b* color system.
